# EUROPEAN PATENT APPLICATION

(11) **EP 1 738 660 A2**
(43) Date of publication of application: **03.01.2007**
(21) Application number: 06250008.7
(22) Date of filing: 04.01.2006
(51) Int. Cl.: A23N 12/04, A23B 7/06

(54) **Rotary steam blancher**

(30) Priority: 14.06.2005 US 152327
(71) Applicant: Lyco Manufacturing, Inc., Columbus, WI 53925 (US)
(72) Inventor: Zittel, David R., Columbus, Wisconsin 53915 (US); Maupin, Daniel D., Corvallis, Oregon 97330 (US)
(74) Representative: Every, David Aidan

(57) **Abstract**

A food processing apparatus includes a tank defining a heat compartment having an inlet end for receiving food product and an outlet end for discharging food product, an inlet for introducing a non-liquid heat transfer medium to the heat compartment, and a drum rotatably mounted within the inner compartment and having an auger therein. The auger advances food product within the tank from the inlet end toward the outlet end and through the non-liquid heat transfer medium. The apparatus includes a recirculation mechanism configured and adapted to create a uniform temperature pattern within the heat compartment and to transfer non-liquid heat transfer medium from the outlet end of the heat compartment to the inlet end of the heat compartment.

## Description

The present invention relates to a rotary steam blancher for cooking food product, and in particular, a steam recirculation system for maintaining a uniform temperature pattern within the blancher.

In mass processing of food product, food product is often heated by cooking or blanching the food product in a food processing apparatus having a tank holding a heat transfer medium into which the food product is immersed. After cooking or blanching of the food product occurs, the food product is cooled or chilled by immersing the food product in a cool transfer medium so that the food product may be packaged, stored and/or shipped. '

In a rotary blancher, food product is introduced into an inlet end of an elongate drum, which is rotatably mounted in a generally cylindrical, open-top tank. The tank is fitted with a cover for minimizing heat loss and for enclosing the drum for safety reasons, and which can be opened for maintenance and cleaning. The drum includes an auger therein for advancing food product from the inlet end of the drum to an outlet end of the drum and through the heat transfer medium.

Typically, rotary blanchers use hot water, or a combination of hot water injected with steam as the heat transfer medium. Until recently, it has been impractical to blanch or cook only using steam because substantial steam leakage from the blancher would be too costly. Current seals prevent steam leakage through sidewall and endwall interfaces between the cover and the tank, openings for the drum journals in the tank and tank cover endwalls, and the drum inlet and outlet openings. However, steam within the rotary blancher is not evenly distributed throughout the blancher, which results in a non-uniform temperature pattern within the blancher and inefficient or non-uniform heat transfer to the food product. Further, as compared to rotary hot water blanchers, high density pockets of food product develop in rotary steam blanchers and draw a disproportionate amount of heat from the heat transfer medium, which results in non-uniform heat transfer to the food product.

In one embodiment, the invention provides a food processing apparatus including a tank defining a heat compartment having an inlet end for receiving food product and an outlet end for discharging food product, and an inlet for introducing a non-liquid heat transfer medium to the heat compartment. A drum is rotatably mounted within the inner compartment and has an auger therein. The auger advances food product within the tank from the inlet end toward the outlet end and through the non-liquid heat transfer medium. The food processing apparatus also includes a recirculation mechanism configured and adapted to create a uniform temperature pattern within the heat compartment and to transfer non-liquid heat transfer medium from the outlet end of the heat compartment to the inlet end of the heat compartment.

In another embodiment, the invention provides a rotary cooker and cooler including a tank having an inlet end and a discharge end, a baffle that divides the tank into a first compartment and a second compartment, a first inlet for introducing a non-liquid heat transfer medium to the first compartment, and a second inlet for introducing a cool transfer medium to the second compartment. A first drum is rotatably mounted within the first compartment of the tank and has an auger therein, wherein the auger advances food product from the inlet end of the tank toward the baffle and through the non-liquid heat transfer medium. A second drum is rotatably mounted within the second compartment of the tank, and has an auger therein, wherein the auger advances food product toward the discharge end the tank and through the cool transfer medium. The rotary cooker and cooler also includes a recirculation mechanism configured and adapted to create a uniform temperature pattern within the first compartment and to transfer non-liquid heat transfer medium from an outlet end of the first compartment to an inlet end of the first compartment.

In yet another embodiment, the invention provides a steam recirculation system for use with a food processing apparatus including a tank and a cover defining a first compartment having an inlet end for receiving food product and an outlet end for discharging food product, and an inlet for introducing steam to the first compartment. The steam recirculation system includes a conduit positioned external to the tank and defining a passageway. The conduit has a first end in fluid communication with the outlet end of the first compartment and a second end in fluid communication with the inlet end of the heat compartment. A fan is positioned within the conduit to facilitate transfer of steam from the outlet end to the inlet end.

Other aspects of the invention will become apparent by consideration of the detailed description and accompanying drawings.

### BRIEF DESCRIPTION OF THE DRAWINGS

Fig. 1 is a perspective view of a rotary steam blancher embodying the invention.

Fig. 2 is a sectional view of the rotary steam blancher taken along a line 2-2 in Fig. 1.

Fig. 3 is a sectional view of the rotary steam blancher taken along a line 3-3 in Fig. 1.

Fig. 4 is a perspective view of a steam recirculation system embodying the invention.

Fig. 5 is a schematic diagram of an inner compartment of the rotary steam blancher.

Fig. 6 is a side view of a rotary cooker and cooler including a steam recirculation system embodying the invention.

Fig. 7 is a side view of the rotary cooker and cooler with a tank cover removed.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

### DETAILED DESCRIPTION

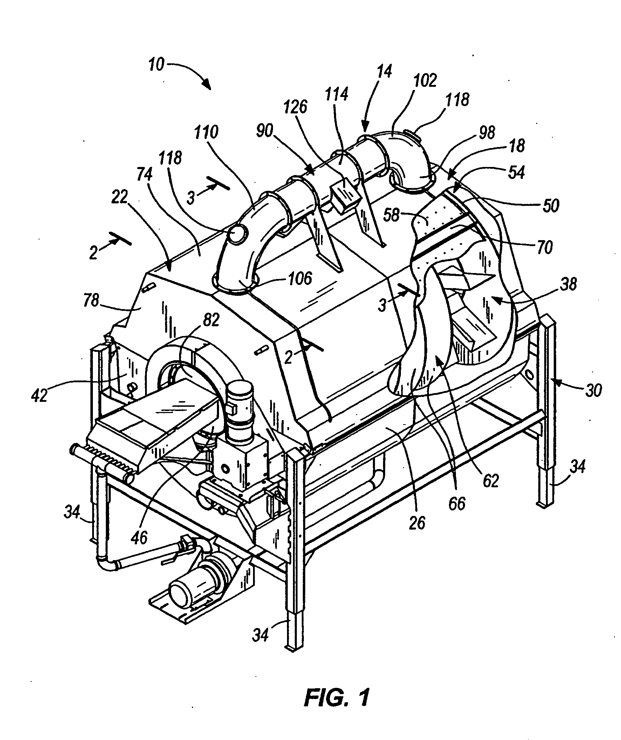

Figs. 1-3 show a rotary blancher 10 for use in a food processing system. The blancher 10, or cooker, uses a non-liquid heat transfer medium to cook food product that advances through the blancher 10. The non-liquid heat transfer medium comprises steam, a heated gas or another heated vapor, although in this application for the purposes of discussion, the invention is discussed with respect to steam. The rotary blancher 10 includes a steam recirculation system 14 to maintain a substantially uniform temperature throughout the blancher 10 during the cooking process. The steam recirculation system 14 transfers steam at an outlet end 18 of the blancher 10 to an inlet end 22 to maintain a consistent temperature within the blancher 10.

The rotary blancher 10 includes an open-top tank 26 that is supported by a frame 30 having legs 34 that rest upon a support surface and space the tank 26 above the support surface. The tank 26 defines in part an inner compartment 38 of the blancher 10. The tank 26 is preferably made of stainless steel or another suitable material for food processing applications. The tank 26 includes an inlet endwall 42 at the inlet end 22 of the tank 26 and an outlet endwall (not shown) at the outlet end 18 of the tank 26. Each endwall defines an arcuate or semicircular opening 46 that communicates with the inner compartment 38 of the tank 26.

A drum 50 is rotatably mounted in the inner compartment 38 of the tank 26 and is configured to transport food product received in the blancher 10 from the inlet end 22 to the outlet end 26 of the tank 26. The drum 50 includes an inlet end (not shown) proximate the inlet opening 46 of the tank 26 and an outlet end 54 proximate the outlet opening (not shown) of the tank 26 with a generally cylindrical and perforate sidewall 58 that substantially extends between the drum ends. The perforations in the sidewall 58 of the drum 50 consist of a plurality of small diameter bores that extend completely through the sidewall 58 to allow steam to pass from the inner compartment 38, through the sidewall 58 and into the drum 50. In another embodiment, the drum 50 is formed from a wire screen.

A helical auger 62 is disposed within the drum 50 and rotates with the drum 50 for advancing food product from the inlet end 22 of the tank 26 toward the outlet end 18 of the tank 26. To further support the auger 62, the inner compartment 38 carries a trunnion (not shown). The auger 62 includes a plurality of axially spaced apart and interconnected flights 66 that spiral substantially the length of the interior of the drum 50. As the auger 62 rotates, the flights 66 move food product from the inlet end (not shown) of the drum 50 to the outlet end 54 of the drum 50. Typically, the auger 62 rotates with the drum 50, however, in another embodiment, the auger 62 may rotate relative to or independently from the drum 50. In the illustrated embodiment, the auger 62 is of coreless construction, however, in further embodiments, the auger flights 66 can be carried by a support core. The drum 50 includes circumferentially spaced apart elongate struts 70 that extend from the inlet end to the outlet end of the drum 50 to help strengthen and rigidify the drum 50 and the respective auger 62. Portions of the outer radial peripheral edge of at least some of the auger flights 66 are coupled to the support struts 70, which provide support to the auger 62 from the support struts 70, the drum 50 and end plates (not shown) of the drum.

An elongated vaulted cover 74 mates with the tank 26 and covers the tank 26 to substantially enclose the inner compartment 38 and provide an enclosure for the steam. In the illustrated embodiment, the cover 74 includes an inlet endwall 78 for positioning at the inlet end 22 of the tank 26 and an outlet endwall (not shown) for positioning at the outlet end 18 of the tank 26. Each cover endwall includes an arcuate or semicircular opening 82 that communicates with the inner compartment 38 and is positioned above the opening 46 in the respective tank endwall. The cover 74 of the tank 26 is generally attached to the tank 26 in such a manner as to allow the cover 74 to move relative to the tank 26 and permit access to the inner compartment 38 of the blancher 10. In one embodiment, the cover 74 is hingedly connected to the tank 26 so the cover 74 can be swung away from the drum 50 to permit access to the drum 50 and the inner compartment 38.

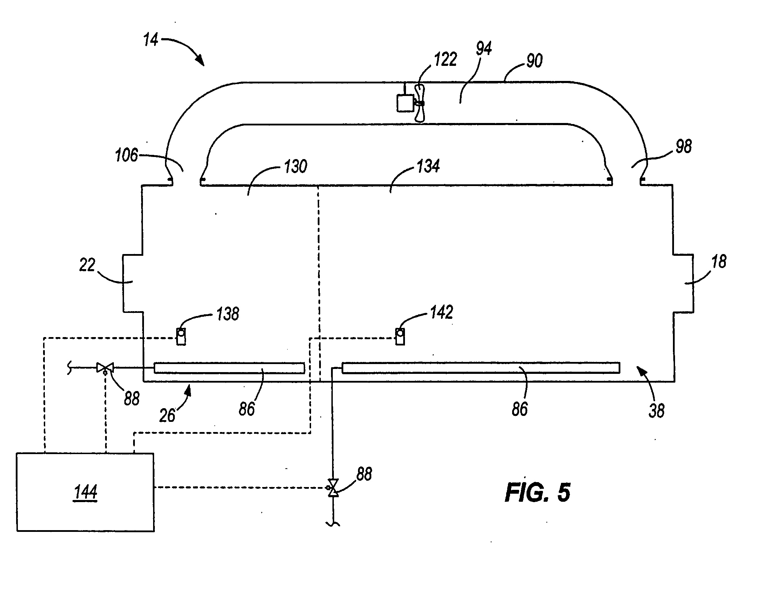

Steam is supplied to the inner compartment 38 of the tank 26 from a supply source (not shown) by manifolds 86 disposed in the inner compartment 38, and steam is supplied to each manifold 86 from a steam header. Generally, steam is delivered to the manifolds 86 under the control or one or more valves 88 (Fig. 5) which help regulate the flow rate and pressure of the steam. Each manifold 86 is a cylindrical pipe having one or more rows of spaced discharge ports or perforations (not shown) disposed along its length through which the steam is introduced to the inner compartment 38. In the discussed embodiment, compressed air is discharged from the manifold 86 with the steam to better effect heat transfer to the food product. However, in some embodiments only steam is used. The drum 50 is constructed and arranged to receive steam such that the steam can surround and contact the food product within the drum 50. In the drum 50, the steam blanches or cooks the food product as the food product is advanced through the drum 50 by the auger 62.

The rotary blancher 10 includes the steam recirculation system 14 for transferring steam from the outlet end 18 of the tank 26 to the inlet end 22 of the tank 26. Although a mixture of steam and air is supplied to the inner compartment 38, because steam is lighter than air, primarily steam is recirculated through the steam recirculation system 14. Recirculation of steam from one end of the tank 26 to another creates an even distribution of steam throughout the blancher 10 and maintains a substantially uniform temperature throughout the blancher 10. The steam recirculation system 14 constantly agitates and stirs the steam and air mixture within the inner compartment 38 and prevents localized cool spots within the tank 26. Uniformity of temperature within the blancher 10 improves efficiency of cooking food product as greater masses of food product can be processed.

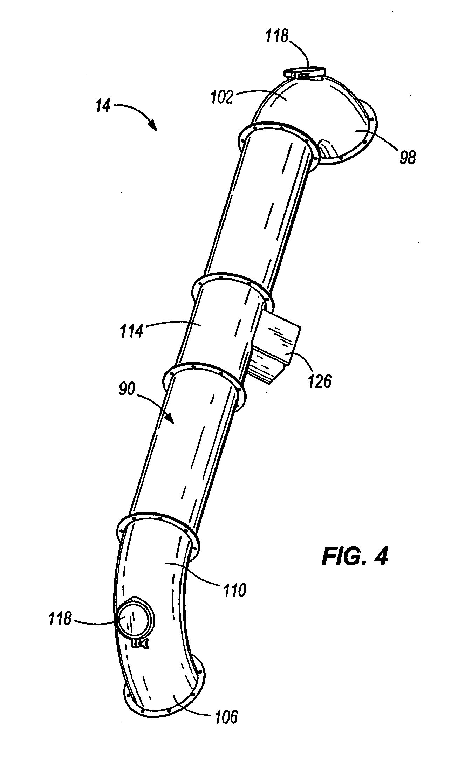

Referring to Figs. 1 and 4, the steam recirculation system 14 includes a conduit 90 positioned external to the tank 26, the conduit 90 defining a passageway 94 in the illustrated embodiment. The conduit 90 is located at an upper portion of the tank cover 74. The conduit 90 includes a first end 98, defined by an elbow section 102 of the conduit 90, that is in fluid communication with the inner compartment 38 at the outlet end 18 of the tank 26. Typically, the first end 98 of the conduit 90 is positioned at a far end of the blancher's heat zone. A second end 106 of the conduit 90, defined by an elbow section 110, is in fluid communication with the inner compartment 38 at the inlet end 22 of the tank 26. A central section 114 connects the first and second ends 98, 106 of the conduit 90. In the illustrated embodiment, a port 118 is positioned in each elbow section 102, 110 to provide access to the passageway 94. Those skilled in the art will recognize that other configurations for the conduit 90 including first and second ends 98, 106 in fluid communication with the inner compartment 38 are possible.

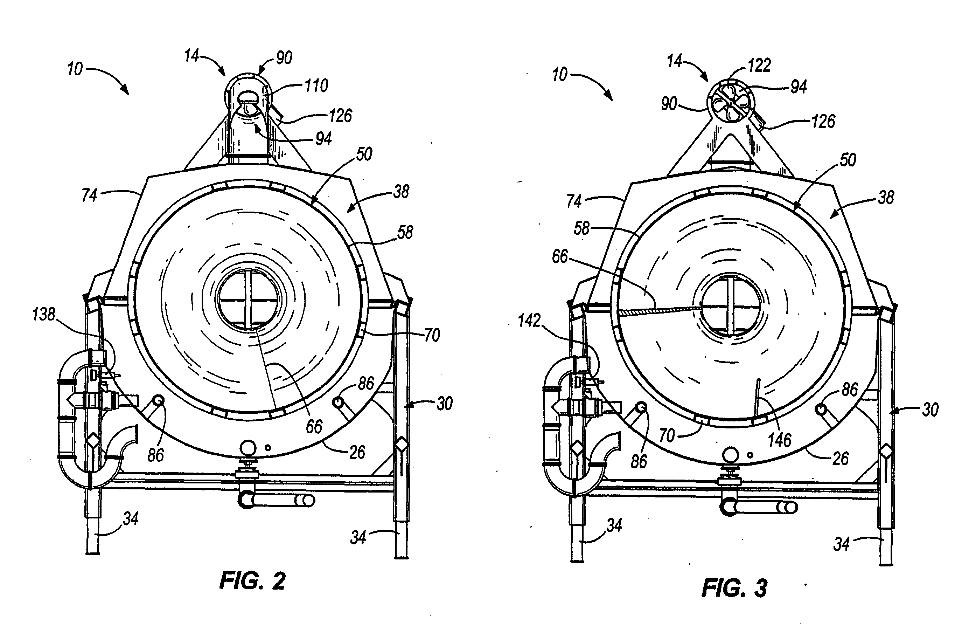

As shown in Fig. 3, a fan 122 is positioned within the passageway 94 of the conduit 90 to facilitate transfer of steam from the outlet end 18 of the tank 26 to the inlet end 22 of the tank 26. The fan 122 draws steam from the outlet end 18 of the tank 26 into the conduit 90, through the conduit 90, and propels the steam to the inlet end 22 of the tank 26. A motor box 126 attached to an outer surface of the conduit 90 stores a fan motor (not shown). In further embodiments, the fan 122 may be positioned anywhere within the conduit 90 of the steam recirculation system 14.

Fig. 5 is a schematic diagram of the inner compartment 38 of the tank 26. The inner compartment 38 of the tank 26 defines a heat zone for the blancher 10 in which steam cooks food product as it passes through the drum 50. In the illustrated embodiment, approximately 50% of the steam within the tank is located in a first portion 130, or zone, of the inner compartment 38. The first portion 130 of the inner compartment 38 is defined by the first one-third of the inner compartment 38 relative to the inlet end 22 of the tank 26. The remaining portion of the steam is located in a second portion 134, or zone, of the inner compartment 38. The second portion 134 of the inner compartment 38 is defined by the last two-thirds of the inner compartment 38 relative to the inlet end 22 of the tank 26.

Referring to Figs. 2, 3 and 5, the blancher includes a first temperature sensor 138 and a second temperature sensor 142 for measuring the average temperature of the inner compartment 38. The first temperature sensor 138 is positioned within the first zone 130 of the inner compartment 38 to measure the average temperature of the steam and air mixture in the first zone 130. The second temperature sensor 142 is positioned within the second zone 134 of the inner compartment 38 to measure the average temperature of the steam and air mixture in the second zone 134. In a preferred embodiment, the temperature sensors 138, 142 are spaced approximately 18 inches from the respective inlet or outlet end 22, 18 of the tank 26. Typically, the temperature sensors 138,142 are positioned opposite major steam headers within the tank 26. As shown in Figs. 2 and 3, the temperature sensors 138, 142 are positioned in a lower half of the tank 26, however, in a further embodiment, the temperature sensors 138, 142 are positioned in an upper half of the tank 26. In another embodiment, water is disposed in the tank 26 to facilitate transfer of food product through the tank 26 and the temperature sensors 138, 142 are positioned above a water line. Each temperature sensor 138, 142 is electrically connected with a steam controller 144 (Fig. 5). Based upon the sensed average temperature, the controller signals the steam valves 88 interconnected with the manifolds 86 to increase or decrease the amount of steam introduced into the inner compartment 38.

The rotary steam blancher 10 has a short blanch cycle time of approximately 5 minutes, therefore, it is important for the temperature sensors 138, 142 to obtain accurate, instantaneous temperature readings within the inner compartment 38. In conventional rotary blanchers, high density areas of food product gather at the bottom of the drum, which absorb a disproportional amount of heat from the steam and results in non-uniform heat transfer to the food product. The present invention rotary blancher 10 includes a plurality of lifters 146 to agitate food product and break up the high density areas of food product within the drum 50. Thereby, more uniform heat transfer to food product occurs.

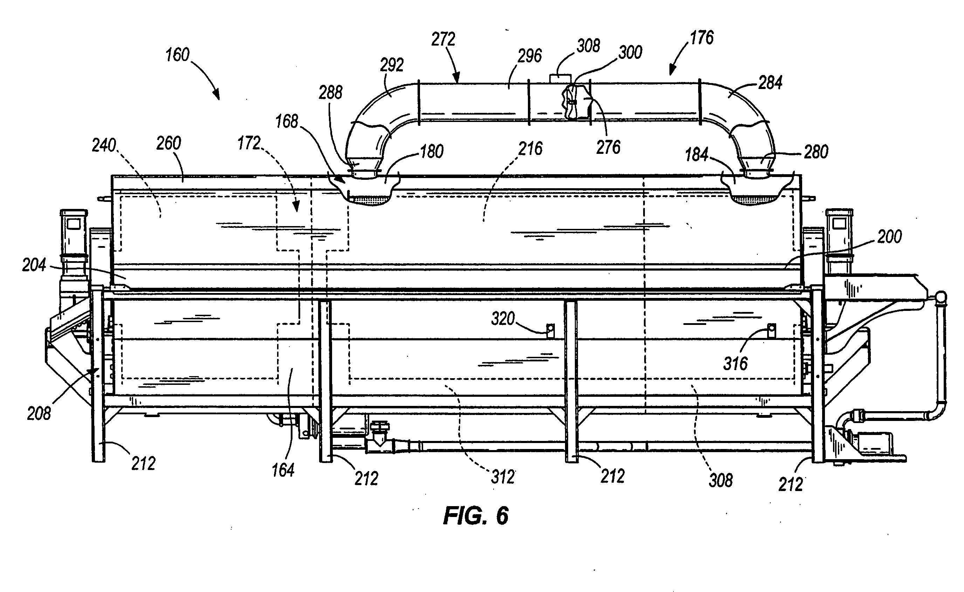

Referring to the rotary blancher 10 in Fig. 3 and a rotary cooker-cooler 160 in Fig. 6, each lifter 146 is carried by and fixed relative to one of the elongate struts 70 of the drum 50. The lifter 146 extends from the strut 70 into the drum 50. In a preferred embodiment, the lifter 146 comprises a plate positioned between adjacent auger flights 66 and three lifters 146 are positioned between each pair of adjacent flights 66. In further embodiments, fewer or more lifters 146 are positioned between each pair of adjacent flights 66. For example, two lifters may be staggered between each pair of adjacent flights. Each lifter 146 has a length of about 7 inches, which is typically longer than lifters used in conventional water rotary blanchers.

In the present embodiment steam rotary blancher 10, the steam recirculation system 14, the temperature sensors 138, 142; and the lifters 146 work together to ensure a uniform heat transfer to food product. The steam recirculation system 14 transfers steam from the outlet end 18 of the tank 26 to the inlet end 22 of the tank 26 to provide a uniform distribution of steam throughout the inner compartment 38. Thus, a substantially uniform temperature within the blancher 10 is achieved and the recirculation of steam prevents localized cold spots within the blancher 10. The temperature sensors 138, 142 read the average steam and air temperature within the inner compartment 38. Based upon the sensed average temperatures, the amount of stearn introduced into the inner compartment 38 is increased or decreased to maintain an average temperature within the blancher 10. Finally, the lifters 146 break up areas of high density food product, which draws a disproportionate amount of steam and air mixture and results in non-uniform heat transfer to the food product. Therefore, the steam recirculation system 14, the temperature sensors 138, 142, and the lifters 146 all contribute to provide a substantially uniform temperature within the blancher 10 such that a uniform heat transfer to the food product occurs and thereby a short blanch cycle time is achieved.

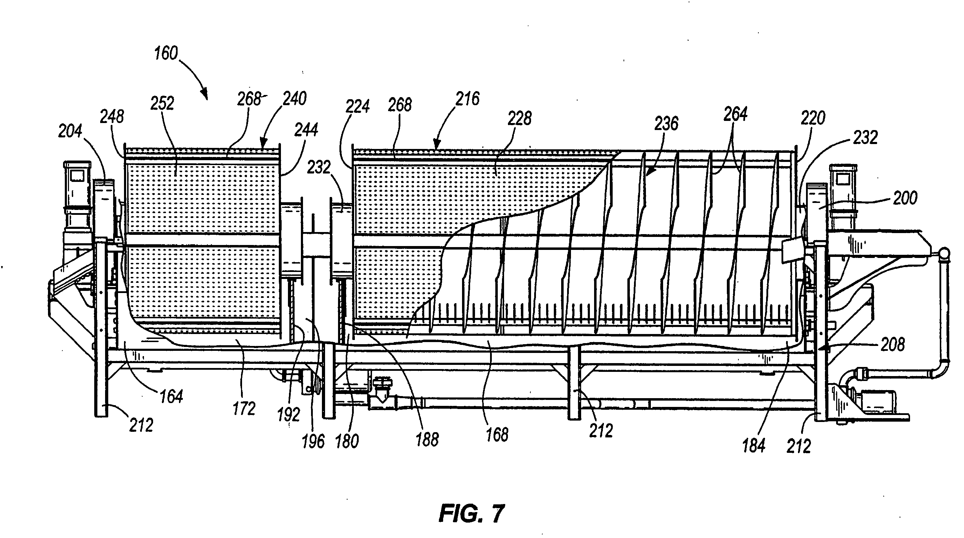

Figs. 6 and 7 illustrate a combination cooker-cooler 160 for use in a food processing system. The cooker-cooler 160 includes a tank 164 that is divided into a first heat compartment 168 for cooking or blanching of food product and a second cool compartment 172 for cooling the food product. A cooker portion (i.e., the first heated compartment) of the cooker-cooler 160 includes a steam recirculation system 176 to maintain a substantial uniform temperature throughout the cooker portion 168 during the cooking process. The recirculation system 176 transfers steam from an outlet end 180 of the cooker portion 168 to an inlet end 184 of the cooker portion 168 to maintain a substantially uniform temperature within the cooker portion 168.

A first baffle 188 and a second baffle 192 divide the tank 164 into the first compartment 168, an intermediate compartment 196, and the second compartment 172, with the intermediate compartment 196 defined between the first baffle 188 and the second baffle 192. The first compartment 168 is positioned between an inlet end 200 of the tank 164 and the first baffle 188, and the second compartment 172 is positioned between an outlet end 204 of the tank 164 and the second baffle 192.

The tank 164 has an open top and is supported by a frame 208 that includes legs 212, which rest upon a support surface and space the tank 164 above the support surface. A first drum 216, or cylinder, is rotatably mounted in the first compartment 168. The first drum 216 includes an inlet end plate 220 approximate the inlet end 200 of the tank 164, and an outlet end plate 224 approximate the first baffle 188 with a generally cylindrical and perforate sidewall 228 that substantially extends between the end plates 220, 224. Each end plate 220, 224 includes a food product opening (not shown) for receiving or discharging food product, generally defined by an axially outwardly extending flange 232. The inlet end 184 of the first compartment 168 is located proximate the inlet end plate 220 and the inlet end 200 of the tank 164, and the outlet end 180 of the first compartment 168 is located adjacent the outlet end plate 224 and the first baffle 188. A helical auger 236 is disposed within the first drum 216 and rotates with the drum 216 for advancing food product from the inlet end 200 of the tank 164 toward the first baffle 188 and the outlet end 180 of the first compartment 168.

A second drum 240, or cylinder, is rotatably mounted in the second compartment 172. The second drum 240 includes an inlet end plate 244 proximate the second baffle 192 and an outlet end plate 248 proximate the outlet end 180 of the tank 164 with a generally cylindrical and perforate sidewall 252 that substantially extends between the end plates 244, 248. Each end plate 244, 248 includes a food product opening (not shown) for receiving or discharging food product. A helical auger 256 is disposed within the second drum 240 and rotates with the drum 240 for advancing food product through the second drum 240 toward the outlet end 204 of the tank 164. In the illustrated embodiment, the first and second drums 216, 240 are driven independently of each other. In another embodiment, the first and second drums 216, 240 are formed from a wire screen.

An elongated vaulted cover 260 mates with the tank 164 and covers the tank 164 to substantially enclose the drums 216, 240 and other components within the tank 164 and provide an enclosure for the steam. The cover 260 of the tank 164 is generally attached to the tank 164 in such a manner as to allow the cover 260 to move relative to the tank 164 and permit access to the inner compartments. In one embodiment, the cover 260 is hingedly connected to the tank 164 so the cover 260 can be swung away from the drums 216, 240 to permit access to the tank interior.

As discussed above with respect to the rotary steam blancher 10, perforations in the sidewall 228, 252 of each drum 216, 240 consist of a plurality of small diameter bores that extend completely through the sidewall 228, 252 to allow heat transfer medium or a cool transfer medium to pass from the respective tank compartment, through the sidewall and into the drum. A heat transfer medium, which in the preferred embodiment is steam, is supplied to the first compartment 168 of the tank 164 from the supply source (not shown) by one or more manifolds or steam headers (not shown) disposed in the first compartment 168. The first drum 216 is constructed and arranged to receive the steam such that the steam can surround and contact the food product within the first drum 216. In the first drum 216, the steam blanches or cooks the food product as the food product is advanced through the drum 216 by an auger 236. In one embodiment, compressed air is discharged from the manifold with the steam to better effect heat transfer.

A cool transfer medium is supplied to the second compartment 172 of the tank 164 from a supply source (not shown) by one or more manifolds or headers (not shown) disposed in the second compartment 172. The second drum 240 is constructed and arranged to receive the cool transfer medium such that the cool transfer medium can surround and contact the food product within the drum 240. In the second drum 240, the cool transfer medium cools the food product as the food product is advanced through the drum 240 by an auger (not shown). In the illustrated embodiment, the cool transfer medium comprises a liquid, such as water. In another embodiment, compressed air is discharged from the manifold with the liquid cool transfer medium to better effect cooling. Other examples of the cool transfer medium include a combination of liquid and a gaseous cool transfer medium, such as water and air, or a gaseous cool transfer medium such as air.

Each auger 236 includes a plurality of axially spaced apart and interconnected flights 264 that spiral substantially the length of the interior of the respective drum. It should be noted that in Fig. 7 only the auger 236 for the first drum 216 is shown. As the auger 236 rotates, the flights 264 move the food product being treated from the inlet end to the outlet end of the respective drum. In the illustrated embodiment, the augers 236 are of a coreless construction. Each drum includes circumferentially spaced apart elongate struts 268 that extend from the inlet end to the outlet end of the drum to help strengthen and rigidify the drum and the respective auger. Portions of the outer radial peripheral edge of at least some of the auger flights 264 are coupled to the support struts 268, which provide support to the auger from the support struts, the drum and the end plates of the drum.

Similar to the rotary blancher 10 discussed above, the rotary cooker-cooler 160 includes the steam recirculation system 176 for transferring steam from the outlet end 180 of the first heat compartment 168 to the inlet end 184 of the first compartment 168. Recirculation of steam from one end of the first compartment 168 to another creates an even distribution of steam within the first compartment 168 of the cooker-cooler 160 and maintains a substantially uniform temperature within the first compartment 168. The steam recirculation system 176 constantly agitates and stirs the steam and air mixture within the first compartment 168 and prevents localized cool spots within the first compartment 168.

Referring to Fig. 6, the steam recirculation system 176 includes a conduit 272 positioned external to the tank 164, the conduit 272 defining a passageway 276. Typically, the conduit 272 is located at the upper portion of the tank cover 260. The conduit 272 includes a first end 280, defined by an elbow section 284 of the conduit 272, that is in fluid communication with the outlet end 180 of the first compartment 168. Typically, the first end 280 of the conduit 272 is positioned at the far end of a heat zone of the first compartment 168. A second end 288 of the conduit 272, defined by an elbow section 292, is in fluid communication with the inlet end 184 of the first compartment 168. A central section 296 connects the first and second ends 280, 284 of the conduit 272.

A fan 300 is positioned within the passageway 276 of the conduit 272 to facilitate transfer of steam from the outlet end 180 of the first compartment 168 to the inlet end 184 of the first compartment 168. The fan 300 draws steam from the outlet end 180 of the first compartment 168 into the conduit 272, through the conduit 272, and propels the steam to the inlet end 184 of the first compartment 168. A motor box 304 is attached to an outer surface of the conduit 272 and stores a fan motor (not shown). In other embodiments, the fan 300 may be positioned anywhere within the conduit 272 of the steam recirculation system 176 and the conduit 272 may have other configurations.

The first compartment 168 of the tank 164 defines a heat zone for the cooker portion of the rotary cooker-cooler 160 in which steam cooks food product as it passes through the first drum 216. Similar to the rotary steam blancher 10 discussed above, in the illustrated embodiment approximately 50% of the steam within the first compartment 168 is located in a first portion 308, or zone, of the first compartment 168. The first portion 308 of the first compartment 168 is defined by the first one-third of the first compartment 168 relative to the inlet end 184. The remaining portion of the steam is located in a second portion 312, or zone, of the first compartment 168. The second portion 312 of the first compartment 168 is defined by the last two-thirds of the first compartment 168 relative to the inlet end 184.

Referring to Fig. 6, the rotary cooker-cooler 160 includes a first temperature sensor 316 and a second temperature sensor 320 for measuring the average temperature of the steam and air mixture within the first compartment 168. The first temperature sensor 316 is positioned within the first zone 308 of the first compartment 168 to measure the average temperature of the steam and air mixture in the first zone 308. The second temperature sensor 320 is positioned within the second zone 312 of the first compartment 168 to measure the average temperature of the steam and air mixture within the second zone 312. Each temperature sensor 316, 320 includes a sensing portion (not shown) that extends into the first compartment 168 of the tank 164. As shown in Fig. 6, the temperature sensors 316, 320 are positioned in a lower half of the tank 164, however, in a further embodiment, the temperature sensors 316, 320 are positioned in an upper half of the tank 164.

Each temperature sensor 316, 320 is electrically connected with a steam controller (not shown). Based upon the sensed average temperature, the controller signals the steam valves (not shown) interconnected with the manifold(s) to increase or decrease the amount of steam introduced into the first compartment 168. The controller and steam valves function similar to those discussed above with respect to Fig. 5.

The present invention rotary cooker-cooler 160 includes a plurality of lifters 324 to agitate food product and break up high density areas of food product within the first drum 216. Therefore, more uniform heat transfer to the food product occurs. Referring to Fig. 7, each lifter 324 is carried by and fixed relative to one of the elongate struts 268 of the first drum 216. Each lifter 324 extends from the strut 268 into the drum 216. In a preferred embodiment, the lifter 324 comprises a plate positioned between adjacent auger flights 264 and three lifters 324 are positioned between each pair of adjacent flights 264.

Various features and advantages of the invention are set forth in the following claims.

## Claims

1. A food processing apparatus comprising:
a tank defining a heat compartment having an inlet end for receiving food product and an outlet end for discharging food product;
an inlet for introducing a non-liquid heat transfer medium to the heat compartment; and
a drum rotatably mounted within the inner compartment and having an auger therein wherein the auger advances food product within the tank from the inlet end toward the outlet end and through the non-liquid heat transfer medium; and
a recirculation mechanism configured and adapted to create a uniform temperature pattern within the heat compartment and to transfer non-liquid heat transfer medium from the outlet end of the heat compartment to the inlet end of the heat compartment.

2. The food processing apparatus of claim 1 wherein the recirculation mechanism is positioned external to the tank.

3. The food processing apparatus of claim 1 wherein the recirculation mechanism comprises a conduit having a first end in fluid communication with the outlet end of the heat compartment and a second end in fluid communication with the inlet end of the heat compartment.

4. The food processing apparatus of claim 3 wherein the first and second ends of the recirculation mechanism are in fluid communication with an upper portion of the heat compartment.

5. The food processing apparatus of claim 3 wherein the recirculation mechanism comprises a fan positioned within the conduit to facilitate transfer of non-liquid heat transfer medium from the outlet end of the heat compartment to the inlet end of the heat compartment.

6. The food processing apparatus of claim 1 wherein the recirculation mechanism is positioned external to the tank.

7. The food processing apparatus of claim 1 wherein the non-liquid heat transfer medium comprises steam.

8. The food processing apparatus of claim 1, and further comprising a temperature sensor positioned within a first zone of the heat compartment to measure an average temperature of the non-liquid heat transfer medium and air, wherein the first zone is defined by about a first third of the heat compartment relative to the inlet end of the heat compartment.

9. The food processing apparatus of claim 1, and further comprising a temperature sensor positioned within a second zone of the heat compartment to measure an average temperature of the non-liquid heat transfer medium and air, wherein the second zone is defined by about a last two-thirds of the heat compartment relative to the inlet end of the heat compartment.

10. The food processing apparatus of claim 1, and further comprising at least one valve for controlling the introduction of the non-liquid heat transfer medium to the heat compartment.

11. The food processing apparatus of claim 10, and further comprising:
at least two temperature sensors positioned within the heat compartment, each temperature sensor for measuring an average temperature of the non-liquid heat transfer medium and air; and
a controller electrically connected to the temperature sensors and the valve, wherein the controller controls the introduction of the non-liquid heat transfer medium to the heat compartment by the valve based upon the measured average temperatures.

12. The food processing apparatus of claim 1, and further comprising a plurality of lifters extending from the drum and fixed relative to the drum to rotate with the drum and agitate food product within the drum.

13. The food processing apparatus of claim 12 wherein each lifter has a length of about 7 inches.

14. The food processing apparatus of claim 12 wherein the auger comprises a plurality of axially spaced apart and interconnected flights, and further wherein at least two lifters are positioned between each pair of adjacent flights.

15. A rotary cooker and cooler comprising:
a tank having an inlet end and a discharge end;
a baffle divides the tank into a first compartment and a second compartment;
a first inlet for introducing a non-liquid heat transfer medium to the first compartment;
a second inlet for introducing a cool transfer medium to the second compartment;
a first drum rotatably mounted within the first compartment of the tank and having an auger therein, wherein the auger advances food product from the inlet end of the tank toward the baffle and through the non-liquid heat transfer medium;
a second drum rotatably mounted within the second compartment of the tank, and having an auger therein, wherein the auger advances food product toward the discharge end the tank and through the cool transfer medium; and
a recirculation mechanism configured and adapted to create a uniform temperature pattern within the first compartment and to transfer non-liquid heat transfer medium from the outlet end of the first compartment to the inlet end of the first compartment.

16. The rotary cooker and cooler of claim 15 wherein the recirculation mechanism defines a passageway having a first end in fluid communication with the outlet end of the first compartment and a second end in fluid communication with the inlet end of the first compartment.

17. The rotary cooker and cooler of claim 15, and further comprising a temperature sensor positioned within a first zone of the first compartment for measuring an average temperature of the non-liquid heat transfer medium and air, wherein the first zone is defined by about a first third of the first compartment relative to the inlet end of the first compartment.

18. The rotary cooker and cooler of claim 15, and further comprising a temperature sensor positioned within a second zone of the first compartment for measuring an average temperature of the non-liquid heat transfer medium and air, wherein the second zone is defined by about a last two-thirds of the first compartment relative to the inlet end of the first compartment.

19. The rotary cooker and cooler of claim 15, and further comprising at least one valve for controlling the introduction of the non-liquid heat transfer medium to the first compartment.

20. The rotary cooker and cooler of claim 18, and further comprising:
at least two temperature sensors positioned within the first compartment, each temperature sensor for measuring an average temperature of the non-liquid heat transfer medium and air; and
a controller electrically connected to the temperature sensors and the valve, wherein the controller controls the introduction of the non-liquid heat transfer medium to the first compartment by the valve based upon the measured average temperatures.

21. The rotary cooker and cooler of claim 15, and further comprising a plurality of lifters extending from the first drum and fixed relative to the first drum to rotate with the first drum and agitate food product within the first drum.

22. The rotary cooker and cooler of claim 21 wherein each lifter has a length of about 7 inches.

23. The rotary cooker and cooler of claim 21 wherein the auger in the first drum comprises a plurality of axially spaced apart and interconnected flights, and further wherein at least two lifters are positioned between each pair of adjacent flights.

24. The rotary cooker and cooler of claim 15 wherein the non-liquid heat transfer medium comprises steam.

25. The rotary cooker and cooler of claim 15 wherein the recirculation mechanism is positioned external to the tank.

26. The rotary cooker and cooler of claim 15 wherein the first and second ends of the recirculation mechanism are in fluid communication with an upper portion of the first compartment.

27. The rotary cooker and cooler of claim 15 wherein the recirculation mechanism comprises a fan positioned within the passageway to facilitate transfer of non-liquid heat transfer medium from the outlet end of the first compartment to the inlet end of the first compartment.

28. The rotary cooker and cooler of claim 15 recirculation mechanism creates a uniform temperature pattern within the first compartment.

29. A steam recirculation system for use with a food processing apparatus including a tank and a cover defining a first compartment having an inlet end for receiving food product and an outlet end for discharging food product, and an inlet for introducing steam to the first compartment, the steam recirculation system comprising:
a conduit positioned external to the tank and defining a passageway, the conduit having a first end in fluid communication with the outlet end of the first compartment and a second end in fluid communication with the inlet end of the heat compartment; and
a fan positioned within the conduit to facilitate transfer of steam from the outlet end to the inlet end.

30. The steam recirculation system of claim 29, and further comprising a port formed in the conduit for providing access the passageway.

31. The steam recirculation system of claim 29, wherein the first and second ends of the conduit are in fluid communication with an upper portion of the heat compartment.
